# DEMANDE DE BREVET EUROPEEN

(11) **EP 3 766 561 A1**
(43) Date de publication de la demande: **20.01.2021**
(21) Numéro de dépôt: 20185849.5
(22) Date de dépôt: 15.07.2020
(51) Int. Cl.: B01D 27/04, B01D 29/11, B01D 21/26, C10G 7/04, C10G 33/06, C02F 1/00, C02F 1/04, C02F 1/38, C02F 11/13, C10M 175/00, B04B 1/08, C10L 1/16, C10G 7/00, C10G 53/02, C10G 31/10, C10G 31/09, C02F 9/00, C02F 103/00, C02F 101/32, C02F 11/18, C02F 11/127, C02F 11/121, B01D 27/14

(54) **INSTALLATION ET PROCÉDÉ DE PURIFICATION DE BOUES D'HYDROCARBURES**

(30) Priorité: 19.07.2019 FR 1908210
(71) Demandeur: Total Marketing Services, 92800 Puteaux (FR); Societe d'Etudes et Realisations pour l'Environnement et le Procede, 76600 Le Havre (FR)
(72) Inventeur: HAVIL, Patrick, 92100 Boulogne Billancourt (FR); BONNAVAUD, Thomas, 75017 Paris (FR); THOREL, Ludovic, 76620 Le Havre (FR)
(74) Mandataire: Fédit-Loriot

(57) **Abrégé**

L'invention concerne une installation et un procédé de purification de boues d'hydrocarbures contenant des hydrocarbures, des solides, des lubrifiants et de l'eau. Cette installation comprend notamment :
- un dispositif (12) de distillation atmosphérique,
- un dispositif de centrifugation (16) adapté pour fournir une accélération centrifuge d'au moins 6500g, et situé en aval du dispositif de distillation (12),
- un premier dispositif de filtration (18) raccordé, notamment directement, à une conduite de récupération (17) du dispositif de centrifugation (16),
- un deuxième dispositif de filtration (20) raccordé, notamment directement, au premier dispositif de filtration (18).

Le dispositif de centrifugation peut également être situé en amont du dispositif de distillation. Le premier dispositif de filtration est alors relié à une conduite d'évacuation d'une fraction lourde du dispositif de distillation.

L'installation et le procédé selon l'invention permettent de récupérer un liquide contenant des hydrocarbures et très peu de matières solides et d'eau.

## Description

L'invention a pour objet un procédé de purification de boues contenant des hydrocarbures, des solides, des lubrifiants et de l'eau.

Les navires génèrent des quantités conséquentes de boues contenant des hydrocarbures, des solides, des lubrifiants et de l'eau. De telles boues, appelées par la suite « boues d'hydrocarbures », se forment dans les réservoirs par décantation, sont générées lors du nettoyage des réservoirs, notamment durant leur séchage, mais peuvent aussi provenir des fuites ou des cycles de lavage des filtres de refoulement, des séparateurs pour le traitement du fioul et de l'huile de lubrification. Des boues d'hydrocarbures peuvent également provenir du nettoyage des installations utilisant des combustibles dans les centrales électriques.

La solution traditionnellement utilisée pour éliminer ces boues d'hydrocarbures est l'incinération à bord du navire ou à terre, par exemple dans des cimenteries. Les boues d'hydrocarbures peuvent ainsi être déshydratées par des évaporateurs puis mélangées à du carburant diesel afin de produire un combustible. D'autres solutions prévoient de traiter les boues par décantation, clarification, déshydratation et filtration.

Ces différents traitements ne permettent cependant pas de récupérer les hydrocarbures présents dans ces boues ou ne permettent pas une utilisation de ces hydrocarbures en tant que combustibles pour moteurs, en raison de leur forte teneur en matière solide, notamment en éléments nocifs pour les moteurs, tels que des particules métalliques dissoutes, des cendres et des sédiments. En outre, les opérations de filtration peuvent s'avérer difficiles en raison du colmatage rapide des filtres.

Le document US2019022555A1 décrit un procédé de traitement de résidus d'hydrocarbures provenant d'équipements d'un navire et notamment provenant du moteur et d'un système de traitement des hydrocarbures alimentant le moteur, ce système comprenant un décanteur, un séparateur, un réservoir et un filtre. Ces résidus d'hydrocarbures subissent une étape d'élimination de l'eau afin d'obtenir des résidus d'hydrocarbures secs qui sont ensuite traités dans une étape de séparation afin de séparer les matières solides des hydrocarbures. Les hydrocarbures peuvent alors être renvoyés en entrée du système de traitement des hydrocarbures en amont du moteur, en mélange avec le carburant moteur. Lors de l'étape d'élimination de l'eau, il n'y a pas élimination d'hydrocarbures, mais uniquement de l'eau.

Il existe donc un besoin pour une installation et un procédé de purification de boues d'hydrocarbures permettant de récupérer des hydrocarbures convenant à une utilisation comme combustible pour des moteurs, notamment des moteurs marins, en particulier en mélange avec d'autres combustibles.

À cet effet, un premier objet de l'invention concerne une installation de purification de boues d'hydrocarbures comprenant d'amont en aval dans une direction de circulation des boues d'hydrocarbures:
- un dispositif de distillation atmosphérique équipé d'une conduite d'évacuation d'une fraction lourde et d'une conduite d'évacuation d'une fraction légère,
- un dispositif de centrifugation adapté pour fournir une accélération centrifuge d'au moins 6500g équipé d'une conduite de récupération d'un liquide présentant une teneur en solides plus faible qu'un liquide entrant dans le dispositif de centrifugation, ce dispositif de centrifugation étant :
   - situé en amont du dispositif de distillation, sa conduite de récupération étant reliée, notamment directement, à une entrée du dispositif de distillation, ou
   - situé en aval du dispositif de distillation dont la conduite d'évacuation d'une fraction lourde est reliée, notamment directement, à une entrée du dispositif de centrifugation,
- un premier dispositif de filtration, notamment conçu pour éliminer des particules solides présentant un diamètre moyen supérieur ou égal à 100µm, et dont une entrée est raccordée, notamment directement ou via une capacité de stockage, à la conduite d'évacuation d'une fraction lourde du dispositif de distillation lorsque ce dernier est en aval du dispositif de centrifugation ou à la conduite de récupération du dispositif de centrifugation lorsque celui-ci est en aval du dispositif de distillation,
- un deuxième dispositif de filtration, notamment conçu pour éliminer des particules solides présentant un diamètre moyen supérieur ou égal à 3µm, et dont une entrée est raccordée, notamment directement ou via une capacité de stockage, à une sortie du premier dispositif de filtration.

Le liquide récupéré en sortie du deuxième dispositif de filtration contient des hydrocarbures et très peu de matière solide et d'eau. Le liquide récupéré peut ainsi présenter une teneur en eau de 0,1 à 0, 6%v/v, de préférence inférieure à 0,3%v/v, voire inférieure à 0,2%v/v, une teneur totale en sédiments de moins de 0,2%m/m, voire inférieure à 0,15%m/m et une teneur en cendres de moins de 0,3%m/m, voire inférieure à 0,20%m/m (pourcentages exprimés par rapport à la masse ou au volume du liquide récupéré). Ces teneurs sont notamment mesurées selon les normes citées dans les exemples.

L'agencement particulier de l'installation selon l'invention permet ainsi une élimination efficace de l'eau et des solides présents dans les boues d'hydrocarbures. En particulier, les hydrocarbures récupérés en sortie du deuxième dispositif de filtration sont utilisables en mélange pour produire des combustibles répondant aux spécifications requises pour des combustibles de moteur, notamment de moteur marin.

Dans la présente description, lorsqu'une conduite est reliée « directement » à un élément, on entend que le fluide circulant dans la conduite ne traverse pas d'autre équipement ou ne subit pas d'autre traitement avant d'arriver à cet élément. De manière similaire, le terme « directement » est employé dans le cadre du procédé pour signifier qu'un fluide n'est pas soumis à un traitement autre que celui décrit.

De manière générale, le dispositif de distillation est ainsi apte à être piloté dans des conditions adaptées pour séparer une fraction légère, notamment gazeuse, et une fraction lourde, notamment liquide. Il peut être apte à être piloté dans conditions adaptées pour séparer une fraction lourde présentant une teneur en eau inférieure ou égale à 10%v/v, par exemple d'au plus de 0,8%v/v, de préférence inférieure à 0,6%v/v, voire inférieure à 0,3%v/v, et optionnellement un point éclair supérieur ou égal à une valeur seuil.

A cet effet, le dispositif de distillation peut être équipé d'un système de pilotage adapté pour déterminer les conditions de distillation en fonction de la teneur en eau de la phase lourde séparée et optionnellement en fonction du point éclair de la phase lourde séparée.

Dans l'ensemble de la présente demande, la teneur en eau et le point éclair peuvent être mesurés selon les normes citées dans les exemples.

De manière générale, le dispositif de centrifugation peut être adapté pour fournir une accélération centrifuge d'au moins 6500g, par exemple de 6500 à 12000g, de préférence de 7000 à 11000g ou de 7000 à 10000g.

De manière générale également, le premier dispositif de filtration peut être conçu (conformé) pour éliminer des particules solides présentant un diamètre moyen supérieur ou égal à 100µm, voire supérieur ou égal à 50µm, de préférence supérieur ou égal à 20µm.

L'installation de purification peut présenter une ou plusieurs des caractéristiques suivantes et de leurs modes de réalisation particuliers :
- le dispositif de centrifugation peut être un séparateur à assiettes, notamment un séparateur à assiettes vertical,
- le premier dispositif de filtration peut comprendre au moins un média de filtration en profondeur, notamment à gradient de porosité homogène,
- le deuxième dispositif de filtration peut comprendre au moins un média de filtration en profondeur à surface plissée, notamment à gradient de porosité homogène,
- le premier dispositif de filtration peut présenter un seuil de filtration de 0,7 à 2µm, de préférence de 0,7 à 1,5µm,
- le deuxième dispositif de filtration peut présenter un seuil de filtration de 0,2 à 0,7µm, de préférence de 0,3 à 0,7µm ou de 0,3 à 0,6µm,
- au moins un dispositif de stockage de la fraction lourde issue du dispositif de distillation relié à une ou plusieurs entrées choisies parmi l'entrée du dispositif de centrifugation, l'entrée du premier dispositif de filtration et l'entrée du deuxième dispositif de filtration, peut être prévu.

En particulier, l'association de dispositifs de filtration comprenant des média de filtration en profondeur et en profondeur à surface plissée permet de réduire considérablement la quantité de sédiments et métaux, notamment dans les différentes combinaisons de seuils de filtration listées ci-dessus. A titre d'exemple, il a été possible de passer d'une quantité de sédiments initialement présentes dans les boues d'hydrocarbures de 2% - 3%m/m à une quantité de 0,1%-0,2%m/m présente dans le liquide récupéré en sortie de l'installation.

Un autre objet de l'invention concerne un procédé de purification de boues d'hydrocarbures, comprenant :
- une étape de distillation atmosphérique des boues d'hydrocarbures dans des conditions adaptées pour séparer une fraction légère, notamment gazeuse, et une fraction lourde liquide,
- une étape de centrifugation dans laquelle :
   ∘ les boues d'hydrocarbures sont soumises, avant l'étape de distillation atmosphérique, à une séparation liquide-solide par centrifugation, et dans laquelle une phase liquide clarifiée et une phase solide sont récupérées, la phase liquide clarifiée étant soumise, notamment directement, à l'étape de distillation atmosphérique, ou
   ∘ la fraction lourde liquide obtenue lors de l'étape de distillation est soumise, notamment directement, à une séparation liquide-solide par centrifugation et dans laquelle une phase liquide clarifiée et une phase solide sont récupérées,
- une première étape de filtration dans laquelle la fraction lourde liquide issue, notamment directement ou via une capacité de stockage, de l'étape de distillation ou la phase liquide clarifiée récupérée, notamment directement ou via une capacité de stockage, de l'étape de centrifugation, est soumise, à une première étape filtration dans des conditions adaptées pour éliminer des particules solides présentant un diamètre moyen supérieur ou égal à 100µm, notamment supérieur ou égal à 50µm, de préférence supérieur ou égal à 20µm, et dans laquelle une première phase liquide purifiée est générée,
- une deuxième étape de filtration dans laquelle la première phase liquide purifiée est soumise, notamment directement ou via une capacité de stockage, à une deuxième étape de filtration dans des conditions adaptées pour éliminer des particules solides présentant un diamètre moyen supérieur ou égal à 3µm, et dans laquelle une deuxième phase liquide purifiée est générée.

La deuxième phase liquide purifiée est constituée majoritairement d'hydrocarbures, et contient des traces d'eau, par exemple moins de 0,6%v/v, de préférence moins de 0,3%v/v, voire moins de 0,2%v/v, et une quantité de solides inférieure à 0,35%m/m, de préférence inférieure à 2000ppm, voire inférieure à 1000ppm.

L'enchainement d'étapes du procédé selon l'invention permet en particulier d'éliminer plus de 90%m/m, voire la totalité, soit 100%m/m, des particules supérieures à 3µm, et jusqu'à 75%m/m des particules supérieures à 1µm, rendant la deuxième phase liquide purifiée utilisable, en mélange avec d'autres combustibles, pour des utilisations comme combustible de moteur, notamment de moteur marin.

La distillation atmosphérique peut avantageusement être réalisée dans des conditions adaptées pour séparer une fraction lourde liquide présentant une teneur en eau inférieure ou égale à 10%v/v.

Avantageusement, la distillation atmosphérique peut être réalisée dans des conditions adaptées pour séparer une fraction lourde liquide présentant une teneur en eau inférieure ou égale à 10%v/v, par exemple d'au plus de 0,8%v/v, de préférence inférieure à 0,6%v/v, voire inférieure à 0,3%v/v, et un point éclair (quelque soit la teneur en eau) supérieur ou égal à une valeur seuil. La fraction légère peut alors comprendre de l'eau et des hydrocarbures ayant un point d'ébullition inférieur ou égal à la température mise en œuvre lors de l'étape de distillation. Ceci peut permettre de récupérer une deuxième phase liquide purifiée présentant un point éclair supérieur ou égal à la valeur seuil.

La valeur seuil de point éclair utilisée pour piloter la distillation atmosphérique pourra être choisie par l'homme du métier en fonction la valeur de point éclair recherchée pour la deuxième phase liquide purifiée, elle pourra notamment être égale à celle-ci, voire supérieure. Cette valeur de point éclair recherchée pour la deuxième phase liquide purifiée peut être fixée par une législation en vigueur et/ou des normes. Par exemple, pour une utilisation de la deuxième phase liquide purifiée comme combustible pour moteur marin, ou composant d'un tel combustible, le point éclair pourra être supérieur ou égal à 60°C, tel que fixé aujourd'hui par la norme ISO 2719 :2016. Cette valeur de point éclair est toutefois susceptible de varier, notamment de baisser, en fonction de l'évolution des législations et/ou des normes applicables.

A titre d'exemple, la valeur seuil pourra être supérieure ou égale à 60°C (conformément à la norme ISO 2719 :2016), voire inférieure, par exemple de 50 à 60°C.

Les première et deuxième étapes de filtration peuvent être mises en œuvre respectivement au moyen des premier et deuxième dispositifs de filtration précédemment décrits.

La première étape de filtration peut comprendre plusieurs passages de la phase liquide au travers d'un premier dispositif de filtration, par exemple de 100 à 400 passages, de préférence de 100 à 350 passages. Ceci peut permettre de réduire davantage la teneur en sédiments.

La deuxième étape de filtration peut comprendre plusieurs passages de la première phase liquide purifiée au travers d'un deuxième dispositif de filtration, par exemple de 25 à 200 passages, de préférence de 25 à 150 passages, encore plus préférentiellement de 50 à 100 passages. Ceci peut permettre de réduire davantage la teneur en sédiments.

L'étape de centrifugation peut avantageusement être réalisée sous une accélération d'au moins 6500g, par exemple de 6500 à 12000g, de préférence de 7000 à 11000g ou de 7000 à 10000g, notamment au moyen d'un dispositif de centrifugation adapté en conséquence, par exemple un séparateur à assiettes, notamment un séparateur à assiettes vertical.

Pour une meilleure séparation des particules en suspension, l'étape de centrifugation peut être réalisée à une température de 70°C à 100°C, de préférence de 70 à 90°C et sous une accélération de 6500 à 12000g, de préférence de 7000 à 10000g.

Avantageusement, pour faciliter la filtration, au moins une étape choisie parmi la première étape de filtration et la deuxième étape de filtration peut être réalisée à une température de 45 à 90°C, de préférence de 45 à 85°C. Notamment, la deuxième étape de filtration peut être mise en œuvre à une température inférieure à celle de la première étape de filtration.

Ce procédé selon l'invention peut notamment être mis en œuvre dans l'installation de purification de la présente invention.

La deuxième phase liquide purifiée issue de la mise en œuvre du procédé selon l'invention peut être utilisée, notamment directement, en mélange avec un autre combustible afin d'obtenir un combustible, par exemple un fioul marin, respectant les spécifications requises pour ce type de combustible.

Un autre objet de l'invention est ainsi un procédé de préparation d'un fioul marin comprenant :
- la purification de boues d'hydrocarbures par mise en œuvre du procédé selon l'invention et la récupération de la deuxième phase liquide purifiée,
- la préparation d'un mélange contenant de 1 à 10%m/m de ladite deuxième phase liquide purifiée avec un fioul marin, notamment tel que défini par la norme ISO 8217 :2017.

En particulier, la deuxième phase liquide purifiée peut être mélangée avec un fioul marin respectant les spécifications RMK 500, RMG380 ou RMG180 (ISO 8217 :2017).

Notamment, le fioul marin ainsi obtenu respecte les spécifications requises par la norme ISO 8217 :2017 (Produits pétroliers -- Combustibles (classe F)Spécifications des combustibles pour la marine), en particulier les spécifications RMK 500, RMG380 ou RMG180 (ISO 8217 :2017).

La teneur en deuxième phase liquide purifiée du fioul marin peut être de de 1 à 10%m/m, 2 à 9%m/m, de 3 à 8%m/m, de 3 à 7%m/m, de 2 à 6%m/m, de 2 à 5%m/m ou dans une gamme résultant de toute autre combinaison de ces bornes.

L'invention est maintenant décrite en référence aux dessins annexés, non limitatifs, dans lesquels :
La figure 1 représente schématiquement une installation de purification de boues d'hydrocarbures selon un premier mode de réalisation ;
La figure 2 représente schématiquement une installation de purification de boues d'hydrocarbures selon un deuxième mode de réalisation.

Sur les figures, les flèches représentent la direction de circulation des fluides.

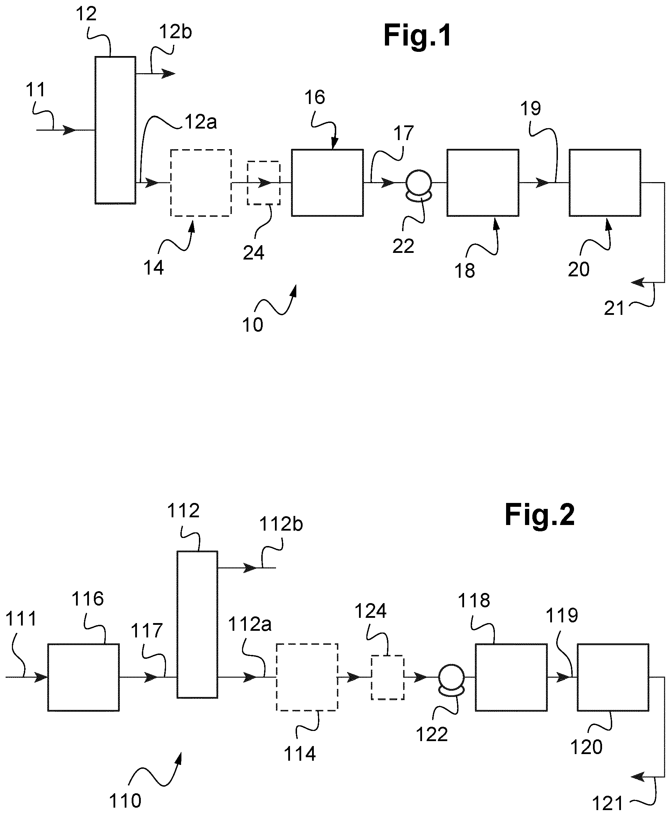

La figure 1 représente une installation de purification de boues 10 comprenant un dispositif de distillation atmosphérique 12, un dispositif de stockage 14 optionnel, un dispositif de centrifugation 16, un premier dispositif de filtration 18 et un deuxième dispositif de filtration 20.

Le dispositif de distillation atmosphérique 12 est équipé d'une conduite d'évacuation d'une fraction lourde 12a, notamment liquide, et d'une conduite d'évacuation d'une fraction légère 12b, notamment gazeuse. Il reçoit les boues à traiter via une conduite d'arrivée 11. Ce dispositif est par exemple une colonne de distillation simple, une colonne de distillation fractionnée ou colonne de distillation flash.

Optionnellement, la fraction lourde 12a peut être stockée dans le dispositif de stockage 14, par exemple une cuve ou enceinte, avant de passer dans le dispositif de centrifugation 16.

Le dispositif de centrifugation 16 est équipé d'une conduite 17 de récupération d'un liquide présentant une teneur en solides plus faible qu'un liquide entrant dans le dispositif de centrifugation par la conduite 12a. Le dispositif de centrifugation 16 est adapté pour fournir une accélération centrifuge d'au moins 6500g. De préférence, il s'agit d'un séparateur à assiettes. Le nombre d'assiettes peut être de 80 à 120, de préférence de 100 à 120, l'espacement entre les assiettes peut être de 500µm voire inférieure. L'invention n'est toutefois pas limitée par ce nombre, l'homme du métier pourra choisir un nombre d'assiettes/ espacement des assiettes suffisant pour éliminer la quantité de solides souhaitée, par exemple en contrôlant la quantité de solides présente dans le liquide en sortie du séparateur à assiettes.

Le premier dispositif de filtration 18 présente une entrée raccordée, ici directement, à la conduite d'évacuation 17 du dispositif de centrifugation 16. Le filtrat (liquide ayant subi la filtration) sort par une conduite 19 et entre dans le deuxième dispositif de filtration 20, ici directement. Le filtrat sortant du deuxième dispositif de filtration 20 est récupéré via la conduite 21.

La filtration mise en œuvre est avantageusement une filtration simple, frontale, par absorption.

Dans un mode de réalisation, le premier dispositif de filtration 18 comprend au moins un média de filtration en profondeur et le deuxième dispositif de filtration 20 comprend au moins un média de filtration en profondeur à surface plissée.

La première filtration est ainsi une filtration en profondeur, les particules, dont la taille peut être inférieure au diamètre des pores du média filtrant, sont retenues (adsorbées) à l'intérieur du réseau poreux de ce dernier. Cette technique de filtration peut permettre d'éliminer d'avantage d'eau par adsorption de celle-ci. Le premier dispositif de filtration assure par ailleurs une répartition des tailles de particules solides à la fois en surface et dans la profondeur du média filtrant. Le média de filtration en profondeur peut être constitué de plusieurs couches de porosités différentes, chaque couche présentant une porosité homogène (même porosité en tout point de cette couche).

La deuxième filtration est une filtration à la fois en profondeur et en surface, le média filtrant retenant les particules dont le diamètre est supérieur au diamètre des pores du média filtrant. Notamment, sans vouloir être lié par une théorie, il est supposé que certains composants du fluide se comportent comme des graisses et s'accumulent sur la surface externe, formant une couche de filtration permettant de retenir les particules. Le deuxième dispositif de filtration permet d'augmenter les performances de filtration sur une répartition plus petite des particules en augmentant la surface extérieure de filtration.

De manière générale, un média filtrant en profondeur présente un gradient de porosité, la porosité décroissant de la surface externe du média filtrant vers l'intérieur de ce dernier. De préférence, chacun des médias filtrant présente un gradient de porosité homogène ce qui peut limiter les risques de colmatage.

Par « gradient de porosité homogène », on entend que la porosité est identique en tout point d'une même section transversale du média filtrant, une section transversale étant définie comme une section dans un plan perpendiculaire à l'écoulement du fluide au travers du média filtrant.

L'homme du métier pourra choisir les seuils de filtration des premier et deuxième dispositifs de filtration en fonction de la quantité de matière solide qu'il doit éliminer. Ces seuils de filtration pourront également être choisis en fonction des tailles de particules à éliminer.

Par « seuil de filtration », on entend ici une taille de pore minimale du dispositif de filtration, à savoir pour un dispositif de filtration à gradient de porosité, la taille des pores en sortie du dispositif de filtration.

En particulier, pour une utilisation comme base pour une composition de combustible marin, le premier dispositif de filtration, notamment au moins un média filtrant de ce premier dispositif de filtration, peut présenter un seuil de filtration de 0,7 à 2µm, de préférence de 0,7 à 1,5µm ou dans une gamme résultant de toute autre combinaison de ces bornes. Le deuxième dispositif de filtration, notamment au moins un média filtrant de ce deuxième dispositif de filtration, peut présenter un seuil de filtration de 0,2 à 0,7µm, de préférence de 0,3 à 0,7µm ou de 0,3 à 0,6µm ou dans une gamme résultant de toute autre combinaison de ces bornes. Toute combinaison des seuils de filtration des deux dispositifs de filtration précédemment listés peut être envisagée. Avantageusement, le seuil de filtration du deuxième dispositif de filtration est inférieur au seuil de filtration du premier dispositif de filtration.

Chaque dispositif de filtration peut également présenter un ratio, appelé rapport bêta dans la suite, pour un seuil de filtration donné, qui est défini comme le nombre de particules de taille supérieure au seuil de filtration pénétrant dans le filtre sur le nombre de particules de taille supérieure au seuil de filtration qui en sort. Ce rapport bêta pourra être choisi par l'homme du métier en fonction de la quantité de manière solide qu'il doit éliminer. Avantageusement, le rapport bêta peut être supérieur à 2000, voire supérieur à 3000 ou 4000, de préférence supérieur à 4500 pour chacun des seuils de filtration mentionnés ci-dessus pour un dispositif de filtration. Ce rapport bêta pourra être déterminé selon la méthode du test OSU F2 modifié « single pass ».

A titre d'exemple, le premier dispositif de filtration peut comprendre de 4 à 6 éléments filtrants se présentant par exemple sous forme de cartouche. Des éléments filtrants utilisables sont par exemple de type CORELESS avec un seuil de rétention de 1µm et un rapport bêta de 5000 pour les particules de 1µm (nombre de particules supérieures à 1µm pénétrant dans le filtre sur nombre de particules supérieures à 1µm qui en sort). Le média filtrant peut être en polypropylène, polyamide ou polysulfure de phénylène (PPS).

Egalement à titre d'exemple, le deuxième dispositif peut comprendre de 5 à 7 éléments filtrants se présentant par exemple sous forme de cartouche. Des éléments filtrants utilisables sont par exemple des éléments plissés profondeur présentant un diamètre moyen de pores de 0,5µm et un rapport bêta de 5000 pour les particules de 0,5µm ou plus. Le média filtrant peut être en polypropylène, polyamide ou polysulfure de phénylène (PPS).

A titre d'exemple, on pourra utiliser des éléments filtrants fabriqués par la société THEMIS.

Une pompe 22 peut être prévue en amont du premier dispositif de filtration 18, tel que représenté, ou en amont du dispositif de centrifugation 16 (non représenté).

On peut également prévoir un échangeur de chaleur 24 en amont du dispositif de centrifugation 16 afin de chauffer le fluide entrant dans ce dernier. En variante, cet échangeur de chaleur 24 pourrait être prévu en amont du premier dispositif de filtration 18, entre ce dernier et le dispositif de centrifugation 16. On peut également prévoir plusieurs échangeurs de chaleur, par exemple un échangeur en amont de chaque dispositif de filtration et un échangeur en amont du dispositif de centrifugation

La figure 2 représente un autre mode de réalisation de l'installation. Sur cette figure, les éléments identiques aux éléments décrits en référence à la figure 1 sont désignés par le même numéro de référence précédé d'un « 1 ».

L'installation de purification 110 représentée figure 2 comporte ainsi également un dispositif de distillation atmosphérique 112, un dispositif de stockage 114 optionnel, un dispositif de centrifugation 116, un premier dispositif de filtration 118 et un deuxième dispositif de filtration 120, chacun de ces dispositifs étant tel que décrit en référence à la figure 1. Toutefois, dans ce mode de réalisation, la conduite d'arrivée 111 des boues à traiter est connectée au dispositif de centrifugation 116, dont la conduite 117 de récupération d'un liquide à teneur réduite en solides, est connectée, ici directement, au dispositif de distillation 112. La fraction lourde produite par le dispositif de distillation 112 est ensuite envoyée au dispositif de filtration 118 par la conduite 112a, optionnellement après stockage dans le dispositif de stockage 114. Le filtrat du premier dispositif de filtration 118 est ensuite conduit, ici directement, au deuxième dispositif de filtration 120 via la conduite 119, le filtrat d'intérêt étant récupéré via la conduite 121. Comme dans le mode de réalisation de la figure 1, un échangeur de chaleur 124 et/ou une pompe 122 peuvent être disposés en amont du premier dispositif de filtration 118. On peut également prévoir un échangeur de chaleur et une pompe en amont du dispositif de centrifugation 116 (non représentés sur la figure 2).

Dans les deux modes de réalisations représentés, la fraction légère 12b, 112b produite par le dispositif de distillation peut être stockée en vue de son utilisation ultérieure. Le dispositif de stockage 14, 114 peut permettre de procéder aux traitements ultérieurs lorsqu'une certaine quantité a été recueillie. Le dispositif de stockage 14, 114 peut être éloigné des autres dispositifs, le transport de fluide se faisant alors soit par des conduites, tel que représenté sur les figures, soit par des moyens de transport (camions citernes).

Quelque soit le mode de réalisation, on peut prévoir une ou plusieurs capacités de stockage pour stocker le produit avant son entrée dans chacun des dispositifs de filtration 18, 20. Ceci peut notamment permettre de contrôler le produit pendant son séjour dans la capacité de stockage mais aussi d'utiliser en permanence les deux dispositifs de filtration : un nouveau batch étant traité par le premier dispositif de filtration lorsqu'un batch précédent sortant du premier dispositif de filtration entre dans le deuxième dispositif de filtration. Ainsi, par exemple, pour chaque dispositif de filtration, un produit en cours de filtration peut, avant chaque passage au travers du dispositif de filtration, être stocké dans une capacité de stockage dédiée dans laquelle sa composition peut être contrôlée (par exemple par contrôle de ses teneurs en cendres, métaux, sédiments, ...). On peut ainsi décider que le produit est passé suffisamment de fois au travers du dispositif de filtration lorsque sa composition ne varie plus ou quasiment plus en matières solides. Il peut alors passer dans le deuxième dispositif de filtration et y être traité de manière similaire en un ou plusieurs passages via une autre capacité de stockage dédiée, ou bien être récupéré s'il sort du deuxième dispositif de filtration. Cet agencement permet un gain en efficacité de l'installation

Le procédé de purification des boues d'hydrocarbures selon l'invention peut être mis en œuvre tel que décrit ci-après, notamment au moyen des installations décrites en référence aux figures 1 et 2.

Les boues à traiter comprennent des hydrocarbures, de l'eau et des solides et de l'huile (lubrifiants).

Elles peuvent présenter jusqu'à 50%m/m d'eau, généralement de 20 à 50%m/m (mesurée selon la norme ISO 3733 :1999).

La matière solide est constituée de produits organiques et / ou inorganiques. Elle comprend des particules métalliques et / ou d'oxyde métallique et / ou de sels métalliques. Les particules métalliques incluent tout ce qu'on peut mettre en évidence lors de la mesure de cendres par la norme ASTM D482-13 ou NF EN ISO 6245-2002, soit : des particules de catalyseur (fines de catalyseur), de la rouille, des particules métalliques, des additifs présents (sulfonates, phénates de calcium et carboxylate de calcium), les anti-usures à base de zinc et de phosphore, les fines de catalyseur (qui sont des résidus des processus de raffinage du pétrole brut mettant en œuvre des catalyseurs, par exemple le craquage catalytique). Les éléments inorganiques incluent les minéraux et particules de sable qui sont mesurables par l'ASTM D 473-07. Les éléments organiques intègrent tout ce qui n'est pas soluble dans le fioul lourd : les résidus de gommes, les cires, les asphaltènes précipités et agglomérés qui sont mesurables par les normes ISO 10307-1 :2009 et l'ASTM D 473-07. En règle générale, la teneur en solides des boues d'hydrocarbures peut être de 10 à 10000 ppm (massique) mesurée selon la norme ASTM D473-07.

Les hydrocarbures présents sont en général des combustibles destinés à être utilisés dans tous les moteurs qui fonctionnent avec les fiouls lourds, tels que les moteurs marins ou les moteurs de centrale électrique. Ces hydrocarbures peuvent notamment être des combustibles marins, tels que définis par la norme ISO 8217 :2017, ou des composants / fractions provenant du traitement d'un tel combustible avant utilisation dans un moteur à bord d'un navire ou dans une centrale électrique.

Les boues d'hydrocarbures peuvent également comprendre des huiles lubrifiantes usées, du type de celles utilisées pour la lubrification des moteurs marins ou de centrales électriques, telles que les huiles de grade SAE 30 ou 40.

De manière générale, le procédé comprend :
- une étape de distillation atmosphérique,
- une étape de centrifugation,
- deux étapes de filtration successives.

L'étape de distillation atmosphérique est mise en œuvre dans un dispositif de distillation, dans des conditions adaptées pour séparer une fraction légère, notamment gazeuse, et une fraction lourde, notamment liquide.

Cette étape est réalisée sous pression atmosphérique, par exemple à une température de 120 à 190°C, de préférence de 130 à 180°C, par exemple à 170°C.

L'invention n'est toutefois pas limitée à une gamme particulière de températures, l'étape de distillation pouvant être mise en œuvre dans des conditions adaptées pour que la fraction lourde présente des propriétés compatibles avec son utilisation ultérieure, notamment par un pilotage approprié du dispositif de distillation, par exemple en mesurant ou en estimant ses propriétés. Les propriétés de la fraction lourde utilisées pour un tel contrôle peuvent être choisies parmi le point éclair, la teneur en eau. Il est notamment possible de piloter le dispositif de distillation en fonction du point éclair et de la teneur en eau de la fraction lourde (mesurés selon les normes citées dans les exemples).

Ainsi, la fraction légère séparée lors de l'étape de distillation contient de l'eau et aussi généralement des hydrocarbures dont le point d'ébullition est inférieur ou égal à la température mise en œuvre lors de l'étape de distillation. Il s'agit donc d'hydrocarbures légers, présentant en général un point éclair faible. On comprend ainsi que le point éclair de la fraction lourde dépendra des conditions de mise en œuvre de l'étape de distillation. Avantageusement, cette étape peut être réalisée dans des conditions adaptées pour obtenir une fraction lourde présentant un point éclair supérieur ou égal à une valeur seuil. Cette valeur seuil pourra être définie en fonction des propriétés souhaitées de la fraction lourde et au final de la deuxième phase liquide purifiée, tel que précédemment décrit.

Pour une utilisation en mélange pour la fabrication d'un combustible pour moteur marin, les conditions de mise en œuvre de l'étape de distillation peuvent être choisies de sorte que la fraction lourde présente :
- un point éclair supérieur ou égal à 60°C (mesuré selon la norme ISO 2719 :2016),
- une teneur en eau de 0,05 à 0,8%v/v (mesurée selon la norme ISO 3733 :1999).

En particulier, quelque soit le mode de réalisation (figure 1 ou 2), la teneur en eau de la fraction lourde peut être au plus de 0,8%v/v, de préférence inférieure à 0,6%v/v, voire inférieure à 0,3%v/v.

L'étape de distillation atmosphérique peut être mise en œuvre dans un dispositif de distillation tel qu'une colonne de distillation simple, une colonne de distillation fractionnée ou colonne de distillation flash. Lorsqu'une colonne de distillation flash est utilisée, il peut être préférable de réaliser l'étape de centrifugation avant l'étape de distillation afin que les boues entrant dans la colonne flash présentent une teneur en eau d'au plus 15%v/v, de préférence d'au plus 10%v/v, pour un fonctionnement optimal de la colonne flash.

L'étape de centrifugation permet de réaliser une séparation liquide-solide par centrifugation, notamment dans un dispositif de centrifugation, ceci afin d'éliminer une partie des solides présents dans les boues. On récupère ainsi une phase liquide clarifiée et une phase solide à l'issue de cette étape, la phase liquide étant envoyée, notamment directement, soit à la première étape de filtration (mode de réalisation de la figure 1), soit à l'étape de distillation (mode de réalisation de la figure 2). La phase solide est quand à elle évacuée.

Cette étape peut permettre d'éliminer majoritairement les particules d'une taille supérieure à 5µm et à poids moléculaire élevé, tel que les métaux et les silices.

Dans un mode de réalisation particulier, l'étape de centrifugation est réalisée sous une accélération de 6500 à 12000g, de 7000 à 11000g ou de 7000 à 10000g. Ces conditions peuvent notamment permettre d'éliminer majoritairement les particules de dimensions supérieures à 5µm.

Avantageusement, l'étape de centrifugation est réalisée à une température de 70°C à 100°C. La phase liquide traitée dans l'étape de centrifugation peut alors être chauffée avant son entrée dans le dispositif de centrifugation, par exemple au moyen d'un échangeur de chaleur ou de tout autre dispositif de chauffage.

Cette étape peut avantageusement être mise en œuvre au moyen d'un séparateur à assiettes, présentant par exemple les caractéristiques décrites en référence à la figure 1. On notera que le nombre d'assiettes choisi peut varier selon le mode d'utilisation du séparateur : en mode séparateur (pour séparer deux phases liquides) ou clarificateur (pour éliminer les particules solides d'une phase liquide). Avantageusement, l'étape de centrifugation peut être mise en œuvre en faisant fonctionner un séparateur à assiette en mode clarificateur. Le nombre d'assiettes peut alors être de 100 à 120. Tel que déjà mentionné, la distance standard entre les assiettes est de 500 µm. Cette distance peut toutefois être réduite si le fluide à traiter n'est pas trop encrassant. L'homme du métier pourra optimiser les conditions de fonctionnement du séparateur et améliorer ainsi la quantité de particules éliminées à cette étape en ajustant le nombre d'assiettes, les angles entre les assiettes, ainsi qu'un ou plusieurs paramètres choisis parmi la température, le temps de séjour, le taux de purge et la force centrifuge exercée, par exemple en déterminant la quantité de particules éliminées, par exemple en mesurant un ou plusieurs paramètres choisis parmi la teneur en cendres, la teneur en sédiments, les teneurs en métaux (notamment en zinc, vanadium), la teneur en calcium, sodium, et la teneur en phosphore, et en aluminium et silicium.

Les deux étapes de filtration successives mises en œuvre permettent enfin d'éliminer la quasi-totalité, soit 99,4%v/v d'eau, voire plus de 99,7%v/v, voire la totalité de l'eau (100%v/v) éventuellement restante, et de réduire encore davantage la teneur en matière solide.

La première étape de filtration peut être mise en œuvre au moyen d'un premier dispositif de filtration comprenant au moins un média de filtration en profondeur, notamment à gradient de porosité homogène. Ce premier dispositif de filtration est notamment conçu pour éliminer des particules solides présentant un diamètre moyen supérieur ou égal à 100µm, voire supérieur ou égal à 50µm, de préférence supérieur ou égal à 20µm.

La deuxième étape de filtration peut être mise en œuvre au moyen d'un deuxième dispositif de filtration comprenant au moins un média de filtration en profondeur à surface plissée, notamment à gradient de porosité homogène. Ce deuxième dispositif de filtration est notamment conçu pour éliminer des particules solides présentant un diamètre moyen supérieur ou égal à 3µm.

Le diamètre moyen d'une particule est tel que défini dans la norme ISO13320 :2020, en référence à la norme ISO 9276-2. Ce diamètre moyen de particule pourra être déterminé selon la norme ISO13320 :2020. On pourra notamment contrôler le diamètre moyen des particules sortant du deuxième dispositif de filtration.

La mise en œuvre des deux étapes successives au moyen de deux dispositifs de filtration de ce type permet une réduction notable de la teneur en matière solide sans colmatage, avec un débit pouvant aller jusqu'à 13l/min. En particulier, une accumulation de graisses en surface des filtres a été observée. Sans vouloir être lié par une théorie, cette couche de graisses pourrait permettre de retenir les insolubles (sable, rouille, coke, fibres, débris divers, précipitation d'asphaltènes) par adsorption/absorption.

### Exemples

### Exemple 1

Des boues d'hydrocarbures ont été traitées dans une colonne de distillation à pression atmosphérique jusqu'à une température de 170°C de manière à séparer les composés gazeux (phase légère) d'une phase lourde liquide. La phase lourde liquide a été traitée dans un séparateur vertical à 113 assiettes de la marque Flottweg® à 80°C sous une accélération de 7000 à 10000g. La phase liquide récupérée est soumise à deux étapes successives de filtration, dont les conditions sont rassemblées dans le tableau 1 suivant. Le filtrat récupéré en sortie de la deuxième filtration est désigné par la dénomination HLRM (Huile Lourde Recyclée Marine).

**Tableau 1**

| | 1^{ère} étape de filtration | 2^{ème} étape de filtration |
|---|---|---|
| Débit | 40L/min | 10L/min |
| Température | 80°C | 50°C |
| Nombre de passes | 150 à 300 | 50 à 100 |
| Seuil de filtration | 1µm | 0,5µm |
| Caractéristiques du filtre | 5 éléments filtrants en profondeur de type Coreless bêta 1µm = 5000 profondeur 40" | 6 éléments filtrants plissé profondeur bêta 0,5µm = 5000 profondeur 60" |

Après les deux étapes de filtration, on observe que 75%m/m des particules sont de diamètre inférieur à 1µm et 100%m/m des particules sont de diamètre inférieur à 3µm.

Le tableau 2 rassemble les caractéristiques du filtrat HLRM en sortie des deux filtrations ainsi que les spécifications d'un combustible marin RMK 500 selon la norme ISO 8217 :2017.

On constate que le HLRM respecte la plupart des spécifications du RMK 500 à l'exception de la teneur en cendres, de la teneur totale en sédiments et de la teneur en métaux. On notera toutefois que les métaux pour lesquels le HLRM ne respecte pas les spécifications RMK 500 sont dissouts (taille inférieure à 3µm) et non sous forme particulaire, de sorte qu'ils ne présentent pas de danger pour les moteurs.

**Tableau 2**

| Analyse | Norme utilisée | Unités | HLRM | Spécifications RMK 500 |
|---|---|---|---|---|
| Viscosité à 50°C | ISO 3104 :1994 | cSt | < 500 | < 500 |
| Masse volumique à 15°C | ISO 12185:1996 | Kg / m³ | <1010 | <1010 |
| CCAI () | ISO 8217 :2017 | sans | <870 | <870 |
| Teneur en soufre | ISO 8754 : 2019 | % m | <3,5 | <3,5 |
| Point Eclair | ISO 2719 :2016 | °C | >60 | >60 |
| Sulfure d'hydrogène | IP570 (2015) | Mg/Kg | <2 | <2 |
| Indice d'acide | ASTM D664A | mg KOH/g | <2,5 | <2,5 |
| Total Sédiments | ISO10307-2 :2009 | % m | <0,15 | <0,10 |
| Résidu carbone (micro) | ISO 10370 :2014 | % m | <18 | <20 |
| Point d'écoulement | ISO 3016 :1994 | °C | <30 | <30 |
| Teneur en eau | ISO 3733 :1999 | %vol | <0,5 | <0,5 |
| Teneur en cendres | ASTM D482-13 | % m | <0,20 | <0,150 |
| Vanadium | IP 501 (2005) | mg/Kg | <350 | <450 |
| Sodium | IP 501 (2005) | mg/Kg | <100 | <100 |
| Aluminium + silicium | IP 501 (2005) | mg/Kg | <100 | <60 |
| Phosphore | IP 501 (2005) | mg/Kg | <200 | <15 |
| Zinc | IP 501 (2005) | mg/Kg | <50 | <15 |
| Calcium | IP 501 (2005) | mg/Kg | <500 | <30 |
| ULO (**) | | | Avec | Sans |

| | | | | |
|---|---|---|---|---|
| (*) CCAI : Calculated Carbon Aromaticity Index (Indice d'aromaticité du carbone calculé) (**) ULO : Used lubricating oil (huiles lubrifiantes usées) D'après la norme ISO 8217 :2017, un combustible de type RMK 500 est considéré comme contenant des ULO si l'une des conditions suivantes est remplie : teneur en Ca>30mg/Kg et teneur en Zn>15 mg/Kg, ou teneur en Ca>30mg/Kg et teneur en P>15 mg/Kg. | | | | |

Le HLRM ainsi obtenu est mélangé à un combustible respectant les spécifications du RMK 500.

Le tableau 3 rassemble les caractéristiques d'un combustible composé de 5%m HLRM et de 95%m d'un combustible respectant les spécifications du RMK 500 (les normes des mesures sont les mêmes que celles figurant dans le tableau 2).

**Tableau 3**

| Analyse | Unités | RMK 500 | 5%m HLRM + 95%m RMK 500 |
|---|---|---|---|
| Viscosité à 50°C | cSt | 453 | 288 |
| Masse volumique à 15°C | Kg / m³ | 1004 | 999 |
| CCAI | sans | 863 | 863 |
| Teneur en Soufre | %m | 2.8 | 2,59 |
| Point Eclair | °C | 76,5 | 76 |
| Sulfure d'hydrogène | mg/Kg | <0,6 | <0,5 |
| Indice d'acide | mg KOH/g | 0,17 | 0,06 |
| Total Sédiments | %m | 0,02 | 0,01 |
| Point d'écoulement | °C | -6 | -3 |
| Teneur en eau | %vol | 0,4 | <0,1 |
| Teneur en cendres | %m | <0,1 | <0,1 |
| Vanadium | mg/Kg | 105 | 116 |
| Sodium | mg/Kg | 14 | 16 |
| Aluminium + silicium | mg/Kg | 29 | 29 |
| Phosphore | mg/Kg | 0 | 9 |
| Zinc | mg/Kg | 0 | 0 |
| Calcium | mg/Kg | 0 | 27 |
| ULO | | Sans | sans |
| Résidu de carbone (micro) | %m | 19,80 | 19,41 |

Le tableau 4 ci-dessous rassemble le nombre de particules contenues dans le HLRM, ce nombre étant déterminé selon la méthode de comptage décrite par la norme ISO 4406 : 2017 (méthode de codification du niveau de pollution particulaire solide d'un fluide).

**Tableau 4**

| | Nombre de particules par ml | |
|---|---|---|
| Taille des particules | Spécification des motoristes | HLRM |
| >4µm | 1300 - 2500 | 610 - 1300 |
| >6µm | 320 - 640 | 160 - 320 |
| >14 µm | 40 - 80 | 20-40 |

### Exemple 2

Le tableau 5 rassemble les résultats obtenus lors du traitement de 6 boues d'hydrocarbures selon le mode de réalisation de la figure 2 (les normes des mesures sont les mêmes que celles figurant dans le tableau 2). La filtration a été réalisée sur deux dispositifs de filtration utilisant les mêmes filtres que ceux décrits dans le tableau 1.

La fraction lourde issue de la distillation a été soumise aux filtrations suivantes menées à une température de 50 à 90°C, de préférence à 70°C :
- filtration 1µm, débit maximal de 40L/min/élément, de 150 à 375 passages,
- filtration 0,5µm, débit maximal 10L/min/élément, de 35 à 50 passages.

**Tableau 5**

| Analyses / Etapes | | Centrifugation Accélération 6800g, T= 70°C Nombre d'assiettes : 113 | | Distillation P atm 170 °C | Filtrations 1 µm puis 0.5 µm 70 °C |
|---|---|---|---|---|---|
| Teneur en | Unité | Amont | Aval | Aval | Aval |
| eau | % v | 20 % - 50 % | 1,5 % - 5 % | 0,2 % - 0,8 % | 0,1 % - 0,2% |
| cendres | % m | 2 % | 0,6 % - 0,8 % | / | 0,2 % - 0,3 % |
| Total sédiments | % m | 2 % - 3 % | 0,5 % - 0,7 % | / | 0,1 % - 0,2 % |
| Ca | mg/kg | 1000 à 1500 | 700 à 1000 | / | 400 à 500 |
| Zn | mg/kg | 150 à 200 | 80 à 100 | / | 30 à 50 |
| P | mg/kg | 300 à 400 | 250 à 300 | / | 150 à 200 |
| Al + Si | mg/kg | 300 à 400 | 150 à 200 | / | 80 à 100 |

### Exemple 3

Un test de combustion a été réalisé sur un combustible composé de 5%m HLRM et de 95%m d'un combustible de type RMK 500, sur le combustible de type RMK 500 et sur le HLRM de l'exemple 1.

Les tests ont été réalisés sur une chaudière Babcock Wanson®, modèle HW3P1760, de capacité nominale 1902kW, équipée d'un brûleur Weishaupt® RM57 (puissance de 450 à 1965kW). Durant chaque test, la chaudière a fonctionné en mode continu sans système de traitement des gaz. Les mesures ont été effectuées au niveau de la cheminée de rejet de la chaudière.

Trois essais ont été menés pour chaque combustible dont les conditions sont rassemblées dans le tableau 6.

**Tableau 6**

| Combustible | Conditions de fonctionnement lors des essais |
|---|---|
| RMK 500 | 1^{er} essai : 6% O₂, 60L/h de combustible |
| | 2^{ème} essai : 4,5%O₂, 70L/h de combustible |
| | 3^{ème} essai : 3% O₂, 70L/h combustible |
| 95%RMK500 + 5% HLRM | 1^{er} essai : 6% O₂, 70L/h de combustible |
| | 2^{ème} essai : 4,5%O₂, 70L/h de combustible |
| | 3^{ème} essai : 3% O₂, 70L/h combustible |
| HLRM | 1^{er} essai : 6% O₂, 70L/h de combustible |
| | 2^{ème} essai : 4,5%O₂, 70L/h de combustible |
| | 3^{ème} essai : 3% O₂, 70L/h combustible |

Le tableau 7 ci-dessous rassemble les résultats du test. Ces résultats montrent une excellente combustion du mélange par rapport à la référence RMK 500 et des valeurs de polluants tout-à-fait en ligne par rapport à la référence RMK 500.

**Tableau 7**

| | **Norme utilisée** | **RMK500** | **Mélange 5% HLRM 95% RMK500** | **HLRM** |
|---|---|---|---|---|
| CO₂ % massique | | 12,8 | 12,7 | **14,3** |
| CO mg/Nm³ | NF EN 1508 - 1998 | 4,5 | 8,2 | **0** |
| Poussières mg/Nm³ | NF EN 13284-1 2017 | 71,5 | 156,9 | **109** |
| NOx mg/Nm³ | NF EN 14792 - 2017 | 569 | 591 | **359** |
| SOx mg/Nm³ | NF EN 14791 - 2017 | 3680 | 4160,9 | **1480** |
| HF mg/Nm³ | NF X 43-304 - 2007 | 0,1 | 0,1 | **0,6** |
| HCl mg/Nm³ | NF EN 1911 - 2010 | 0,4 | 0,8 | **22,3** |
| Nickel µg/Nm³ | NF EN 14385 - 2004 | 1244 | 152 | **660** |
| Vanadium µg/Nm³ | NF EN 14385 - 2004 | 3483 | 4491 | **1592** |
| Zinc µg/Nm³ | NF EN 14385 - 2004 | 320 | 217 | **1540** |
| Mercure mg/Nm³ | NF EN 13211 - 2001 | 0 | 0 | |
| **COVT mg/Nm³** | **NF EN 12619** - **2013** | **3,8** | **1,6** | |

| | | | | |
|---|---|---|---|---|
| COVT : Composés Organiques Volatils Totaux | | | | |

Ces mesures ont été réalisées conformément aux modalités prévues dans les textes réglementaires suivants:
- Arrêté du 11 mars 2010 « portant modalité d'agrément des laboratoires ou des organismes pour certains types de prélèvements et d'analyses à l'émission des substances dans l'atmosphère ».
- Arrêté du 7 juillet 2009 « relatif aux modalités d'analyse dans l'air et dans l'eau dans les ICPE et aux normes de référence ».
- Document LAB REF 22 du COFRAC « Exigences spécifiques Qualité de l'air - Emissions de sources fixes ».

## Revendications

1. Installation (10, 110) de purification de boues d'hydrocarbures comprenant de 20 à 50%m/m d'eau, l'installation comprenant d'amont en aval dans une direction de circulation des boues d'hydrocarbures:
- un dispositif (12, 112) de distillation atmosphérique équipé d'une conduite d'évacuation (12a, 112a) d'une fraction lourde et d'une conduite d'évacuation (12b, 112b) d'une fraction légère,
- un dispositif de centrifugation (16, 116) adapté pour fournir une accélération centrifuge d'au moins 6500g équipé d'une conduite de récupération (17, 117) d'un liquide présentant une teneur en solides plus faible qu'un liquide entrant dans le dispositif de centrifugation, ce dispositif de centrifugation étant :
i. situé en amont du dispositif de distillation (112), sa conduite de récupération (117) étant reliée, notamment directement, à une entrée du dispositif de distillation, ou
ii. situé en aval du dispositif de distillation (12) dont la conduite d'évacuation (12a) d'une fraction lourde est reliée, notamment directement, à une entrée du dispositif de centrifugation,
- un premier dispositif de filtration (18, 118), optionnellement conçu pour éliminer des particules solides présentant un diamètre moyen supérieur ou égal à 100µm, dont une entrée est raccordée, notamment directement, à la conduite d'évacuation (112a) d'une fraction lourde du dispositif de distillation (112) lorsque ce dernier est en aval du dispositif de centrifugation, ou à la conduite de récupération (17) du dispositif de centrifugation (16) lorsque celui-ci est en aval du dispositif de distillation,
- un deuxième dispositif de filtration (20, 120), optionnellement conçu pour éliminer des particules solides présentant un diamètre moyen supérieur ou égal à 3µm, dont une entrée est raccordée, notamment directement, à une sortie du premier dispositif de filtration (18, 118).

2. Installation (10, 110) de purification selon la revendication 1, **caractérisée en ce que** le dispositif de centrifugation (16, 116) est un séparateur à assiettes.

3. Installation (10, 110) de purification selon la revendication 1 ou 2, **caractérisée en ce qu'**elle comprend au moins une des caractéristiques suivantes :
- le premier dispositif de filtration (18, 118) comprend au moins un média de filtration en profondeur, notamment à gradient de porosité, en particulier à gradient de porosité homogène,
- le deuxième dispositif de filtration (20, 120) comprend au moins un média de filtration en profondeur à surface plissée, notamment à gradient de porosité, en particulier à gradient de porosité homogène.

4. Installation (10, 110) selon l'une quelconque des revendications 1 à 3, **caractérisée en ce qu'**elle comprend au moins une des caractéristiques suivantes :
- le premier dispositif de filtration présente un seuil de filtration de 0,7 à 2µm, de préférence de 0,7 à 1,5µm,
- le deuxième dispositif de filtration présente un seuil de filtration de 0,2 à 0,7µm, de préférence de 0,3 à 0,7µm ou de 0,3 à 0,6µm.

5. Installation (10, 110) selon l'une quelconque des revendications 1 à 4, **caractérisée** en ce le dispositif de distillation est apte à être piloté dans des conditions adaptées pour séparer une fraction légère, notamment gazeuse, et une fraction lourde, notamment liquide.

6. Installation (10, 110) selon l'une quelconque des revendications 1 à 5, **caractérisée** en ce le dispositif de distillation est apte à être piloté dans des conditions adaptées pour séparer une fraction lourde présentant une teneur en eau inférieure ou égale à 10%v/v, et optionnellement un point éclair supérieur ou égal à une valeur seuil.

7. Procédé de purification de boues d'hydrocarbures mis en œuvre dans l'installation de purification selon l'une quelconque des revendications 1 à 6, comprenant
- une étape de distillation atmosphérique des boues d'hydrocarbures comprenant de 20 à 50%m/m d'eau dans des conditions adaptées pour séparer une fraction légère, notamment gazeuse, et une fraction lourde liquide,
- une étape de centrifugation dans laquelle :
∘ les boues d'hydrocarbures sont soumises, avant l'étape de distillation atmosphérique, à une séparation liquide-solide par centrifugation, et dans laquelle une phase liquide clarifiée et une phase solide sont récupérées, la phase liquide clarifiée étant soumise, notamment directement, à l'étape de distillation atmosphérique, ou
∘ la fraction lourde liquide obtenue lors de l'étape de distillation est soumise, notamment directement, à une séparation liquide-solide par centrifugation et dans laquelle une phase liquide clarifiée et une phase solide sont récupérées,
- une première étape de filtration, dans laquelle la fraction lourde liquide issue, notamment directement, de l'étape de distillation, ou la phase liquide clarifiée récupérée, notamment directement, de l'étape de centrifugation, est soumise, à une première étape filtration dans des conditions adaptées pour éliminer des particules solides présentant un diamètre moyen supérieur ou égal à 100µm, et dans laquelle une première phase liquide purifiée est générée,
- une deuxième étape de filtration, dans laquelle la première phase liquide purifiée est soumise, notamment directement, à une deuxième étape de filtration dans des conditions adaptées pour éliminer des particules solides présentant un diamètre moyen supérieur ou égal à 3µm, et dans laquelle une deuxième phase liquide purifiée est générée,
et dans lequel la distillation atmosphérique est réalisée dans des conditions adaptées pour séparer une fraction lourde liquide présentant une teneur en eau inférieure ou égale à 10%v/v.

8. Procédé de purification selon la revendication 7, dans lequel la distillation atmosphérique est réalisée dans des conditions adaptées pour séparer une fraction lourde liquide présentant une teneur en eau d'au plus de 0,8%v/v, de préférence inférieure à 0,6%v/v, voire inférieure à 0,3%v/v.

9. Procédé de purification selon la revendication 7 ou 8, dans lequel la distillation atmosphérique est réalisée dans des conditions adaptées pour séparer une fraction lourde liquide présentant un point éclair supérieur ou égal à une valeur seuil.

10. Procédé de purification selon l'une quelconque des revendications 7 à 9, dans lequel la première étape de filtration comprend plusieurs passages de la phase liquide au travers d'un premier dispositif de filtration, et/ou dans lequel la deuxième étape de filtration comprend plusieurs passages de la première phase liquide purifiée au travers d'un deuxième dispositif de filtration.

11. Procédé de purification selon l'une quelconque des revendications 7 à 10, dans lequel l'étape de centrifugation est réalisée sous une accélération d'au moins 6500g.

12. Procédé de purification selon l'une quelconque des revendications 7 à 11, dans lequel l'étape de centrifugation est réalisée à une température de 70°C à 100°C et sous une accélération de 6500 à 12000g.

13. Procédé de purification selon l'une quelconque des revendications 7 à 12, dans lequel au moins une étape choisie parmi la première étape de filtration et la deuxième étape de filtration est réalisée à une température de 45 à 90°C, de préférence de 45 à 85°C.

14. Procédé de préparation d'un fioul marin comprenant :
- la purification de boues d'hydrocarbures par mise en œuvre du procédé selon l'une des revendications 7 à 13 et la récupération de la deuxième phase liquide purifiée,
- la préparation d'un mélange contenant de 1 à 10%m/m de ladite deuxième phase liquide purifiée avec un fioul marin.
